# EUROPÄISCHE PATENTANMELDUNG

(11) **EP 0 648 819 A1**
(43) Veröffentlichungstag der Anmeldung: **19.04.1995**
(21) Anmeldenummer: 94115722.4
(22) Anmeldetag: 06.10.1994
(51) Int. Cl.: C09D 5/24, C09D 133/12

(54) **Leitfähige Lackformulierung**

(30) Priorität: 16.10.1993 DE 4335364
(71) Anmelder: MERCK PATENT GmbH, D-64293 Darmstadt (DE)
(72) Erfinder: Glausch, Ralf, Dr., D-64257 Darmstadt (DE); Maus, Wolfgang, D-64372 Ober-Ramstadt (DE); Stenzel, Norbert, D-68623 Lampertheim (DE)

(57) **Zusammenfassung**

Leitfähige Lackformulierung, enthaltend
(i) 5-25 Gew.-% eines Bindemittels, bestehend aus einer Mischung von
   a) 40 bis 60 Gew.-% eines Acrylharzes auf Basis Methylmethacrylat und
   b) 60 bis 40 Gew.-% modifiziertem PVC,
(ii) 60-85 Gew.% eines Lösungsmittelgemisches, bestehend aus Estern, Aromaten und Ketonen im Verhältnis von 0,9 : 2,5 : 1,2 bis 1,1 : 2,7 : 1,4 und
(iii) 5-25 Gew.-% eines elektrisch leitenden Pigmentes.

## Beschreibung

Die Erfindung betrifft eine leitfähige Lackformulierung zur Verhinderung statischer Aufladung von Kunststoffoberflächen, insbesondere von PVC-Oberflächen.

Herkömmliche Kunststoffe besitzen einen Oberflächenwiderstand, der größer als 1000 M Ohm ist. Um die Akkumulation von statischer Elektrizität auf Kunststoffteilen zu verhindern, werden sie entweder mit einer leitfähigen Beschichtung ausgerüstet oder es werden leitfähige Materialien in den Kunststoff eingearbeitet. Die leitfähigen Beschichtungen bestehen aus einem Lackbindemittel und einem leitfähigen Pigment, beispielsweise Ruß oder Graphit. Um eine ausreichende Leitfähigkeit zu erzielen, müssen Rußkonzentrationen von 10 bis 30 % angewendet werden (Firmenschrift von Degussa: Schriftenreihe Pigmente, Degussa-Pigmentruße für leitfähige Beschichtungen, Nummer 65, Seiten 8 bis 15).

Aufgrund seiner hohen Lichtabsorption im sichtbaren Spektralbereich kann aber Ruß nicht für transparente, helle Beschichtungen eingesetzt werden. Ein weiteres Problem ist die starke Absorption von Ruß im IR-Bereich, was beispielsweise bei Sonneneinstrahlung zu einer vielfach unerwünschten Erwärmung der beschichteten Gegenstände führt. Für helle, leitfähige Beschichtungen wird deshalb zunehmend Antimon dotiertes Zinnoxid eingesetzt.

Die EP-A-0 487 366 beschreibt antistatische und radiotransparente Coatings für Antennen von Weltraumsatelliten. Das hierfür verwendete Pigment besteht aus Zinndioxid und Titandioxid, die mit Antimon dotiert sind. Wahlweise kann dem Anstrichmittel ein nichtleitendes, weißes Pigment, beispielsweise TiO₂, zugesetzt werden, um den Weißgrad des Anstrichmittels zu verbessern.

Für den Oberflächenwiderstand der Beschichtung werden Werte zwischen 2-500 MΩ angegeben. Für antistatische Beschichtungen, für die man in der Regel einen Oberflächenwiderstand von weniger als 1 MΩ fordert, ist die Leitfähigkeit dieses Lackes zu gering.

Bei der Beschichtung von Weich-PVC treten zusätzliche Probleme bezüglich der Haftung des Lackes auf. Der im Kunststoff enthaltene Weichmacher diffundiert in Richtung der Phasengrenze PVC/Lack und zerstört die Haftung des Lackes auf der Kunststoffoberfläche.

Aufgabe der Erfindung ist es, eine leitfähige Lackformulierung bereitzustellen, die neben einer hohen Leitfähigkeit eine hohe Transparenz besitzt und auf Kunststoffoberflächen, insbesondere auf Weich-PVC, gut haftet.

Diese Aufgabe wird gemäß der Erfindung gelöst durch eine leitfähige Lackformulierung, enthaltend
(i) 5-25 Gew.-% eines Bindemittels (Festkörper), bestehend aus einer Mischung von
   a) 40 bis 60 Gew.-% eines Acrylharzes auf Basis Methylmethacrylat und
   b) 60 bis 40 Gew.-% modifiziertem PVC,
(ii) 60-85 Gew.% eines Lösungsmittelgemisches, bestehend aus Estern, Aromaten und Ketonen im Gewichtsverhältnis von 0,9 : 2,5 : 1,2 bis 1,1 : 2,7 : 1,4 und
(iii) 5-25 Gew.-% eines elektrisch leitenden Pigmentes.

Gegenstand der Erfindung ist weiterhin die Verwendung der erfindungsgemäßen Lackformulierung für elektrisch leitende Überzüge auf Kunststoffen.

Als Lackbindemittel (i) wird ein Gemisch aus 40 bis 60 Gew.-% eines Acrylharzes und 60 bis 40 Gew.-% eines modifizierten Polyvinylchlorids eingesetzt.

Geeignete Acrylharze sind Harze auf Basis Methylmethacrylat.

Das Polyvinylchlorid kann zum Beispiel mit Vinylacetat modifiziert sein.

Besonders geeignet als Bindemittel ist ein Gemisch aus Polyvinylchlorid und einem Acrylharz der Firma Röhm, Darmstadt, das unter dem Handelsnamen Plexigum® M 335 im Handel verfügbar ist. Dieses Produkt besteht aus einem Gemisch aus Polyvinylchlorid, das mit Vinylacetat modifiziert ist und einem Acrylharz auf Basis Methylmethacrylat im Gewichtsverhältnis 1:1.

Der Anteil des Lackbindemittels (Festkörper) in der erfindungsgemäßen Lackformulierung beträgt 5 bis 25 Gew.-%, vorzugsweise 10 bis 15 Gew.-%.

Für das Lösungsmittelgemisch (ii) können Ester, Aromaten und Ketone verwendet werden. Dabei ist zu beachten, daß diese drei Komponenten in einem bestimmten Verhältnis zueinander gemischt werden müssen. Das Gewichtsverhältnis von Ester: Aromaten: Ketonen beträgt 0,9 : 2,5 : 1,2 bis 1,1 : 2,7 : 1,4.

Als Ester können beispielsweise n-Butylacetat (90 - 100%ig), n-Butylacetat (85%ig), als Aromaten, Xylol, Solvesso 150 oder Shellsol A und als Ketone Cyclohexanon oder Diisobutylketon eingesetzt werden.

Als elektrisch leitfähige Pigmente werden für die erfindungsgemäße Lackformulierung Pigmente eingesetzt, bei denen das leitfähige System, beispielsweise mit Antimon dotiertes Zinnoxid, alleiniger Bestandteil des Pigmentes ist. Weiterhin können Pigmente verwendet werden, die aus einem Träger und dem darauf abgeschiedenen leitfähigem System bestehen. Ein solches Pigment ist Minatec® 31 CM, ein mit Zinn-/Antimonoxid beschichteter Glimmer, hergestellt von E. MERCK, Darmstadt.

Weitere geeignete Trägermaterialien sind neben Glimmer andere Schichtsilikate wie zum Beispiel Kaolin oder Talkum sowie Glasplättchen. Als leitfähige Systeme sind zum Beispiel Antimon dotiertes Zinnoxid, Halogen dotiertes Zinnoxid, Aluminium dotiertes Zinkoxid oder auch Halogen dotiertes Zinkoxid geeignet.

Eine weitere Gruppe leitfähiger Pigmente, die für die erfindungsgemäße Lackformulierung geeignet sind, sind Pigmente, die auf einem Trägermaterial basieren, das mit einem oder mehreren Metalloxiden beschichtet ist und bei denen die leitfähige Schicht als Deckschicht ausgebildet ist. Ein solches Pigment ist Minatec® CM 30, das aus mit Titandioxid beschichteten Glimmer besteht und als leitfähige Schicht eine Antimon dotierte Zinndioxidschicht besitzt, wobei zwischen der Metalloxidschicht und der leitfähigen Schicht noch eine Siliziumdioxidschicht angeordnet ist.

Die leitfähigen Pigmente können nach den in den deutschen Patentanmeldungen DE 38 42 330, DE 42 13 747, DE 42 40 115 und DE 42 43 163 beschriebenen Verfahren hergestellt werden.

Die erfindungsgemäße Lackformulierung wird hergestellt, indem zunächst die Lösungsmittel vorgelegt und homogenisiert werden. Anschließend wird das Bindemittel unter Rühren in das Lösungsmittelgemisch gegeben und gelöst. Hierfür sind etwa 4 Stunden erforderlich. Dann wird unter Rühren das Pigment in die Bindemittellösung gegeben und das Gemisch homogenisiert. Das Pigment kann aber auch zwecks besserer Benetzung vor seiner Zugabe mit einem Teil des Lösungsmittelgemisches angeteigt oder angeschlemmt werden.

Dieses Verfahren hat den Vorteil, daß die Lackformulierung in einer Kaltlösung, d.h. ohne Erwärmen, hergestellt werden kann.

Mit der erfindungsgemäßen Lackformulierung wurden Rolltore aus Weich-PVC in einem explosionsgeschützten Bereich beschichtet. Der von der Technischen Überwachung des Bundeslandes Hessen geforderte Maximalwert von 10⁹ Ohm für den Oberflächenwiderstand wurde mit einem Oberflächenwiderstand von 10⁶ Ohm deutlich unterschritten. Regelmäßige Untersuchungen zeigten, daß im Zeitraum von 6 Monaten bezüglich der Leitfähigkeit der Beschichtung keine Veränderungen eintraten. Auch bezüglich Abriebfestigkeit, Flexibilität und Transparenz wurden keine Veränderungen festgestellt. Die erfindungsgemäße Lackformulierung ist somit für antistatische Beschichtungen in explosionsgeschützten Bereichen hervorragend geeignet.

Das nachfolgende Beispiel soll die Erfindung näher erläutern, ohne sie jedoch zu beschränken.

### Beispiel

16,23 g Butylacetat, 25,97 g Xylol, 8,11 g Solvesso 150, 8,11 g Shellsol A, 18,99 g Cyclohexanon und 2,42 g Diacetonalkohol werden in einen Glaskolben gegeben und unter Rühren homogenisiert. Anschließend werden 12,17 g Plexigum M 335 (Hersteller: Röhm, Darmstadt) langsam zugegeben und das Gemisch für 4 bis 5 Stunden weitergerührt, bis sich das Bindemittel gelöst hat. Danach werden 8 g Minatec® 31 CM langsam unter Rühren zugegeben und das Gemisch homogenisiert. Man erhält 100 g Lack.

Dieser Lack wurde mittels einer pneumatischen Spritzpistole auf Weich-PVC appliziert und an der Luft getrocknet. Der sich einstellende Flächenwiderstand lag über die gesamte Fläche im Bereich von 0,13 M Ohm. Die Schicht ist transparent.

## Patentansprüche

1. Leitfähige Lackformulierung, enthaltend
(i) 5-25 Gew.-% eines Bindemittels, bestehend aus einer Mischung von
a) 40 bis 60 Gew.-% eines Acrylharzes auf Basis Methylmethacrylat und
b) 60 bis 40 Gew.-% modifiziertem PVC,
(ii) 60-85 Gew.% eines Lösungsmittelgemisches, bestehend aus Estern, Aromaten und Ketonen im Verhältnis von 0,9: 2,5 : 1,2 bis 1,1 : 2,7 : 1,4 und
(iii) 5-25 Gew.-% eines elektrisch leitenden Pigmentes.

2. Lackformulierung nach Anspruch 1, dadurch gekennzeichnet, daß das Acrylharz ein Harz auf Basis Methylmethacrylat ist.

3. Lackformulierung nach Anspruch 1, dadurch gekennzeichnet, daß das PVC mit Vinylacetät modifiziert ist.

4. Lackformulierung nach Anspruch 1, dadurch gekennzeichnet, daß als Lösungsmittel n-Butylacetat, Solvesso 150, Xylol, Shellsol A, Diisobutylketon, Diacetonalkohol und Cyclohexanon eingesetzt werden.

5. Lackformulierung nach Anspruch 1, dadurch gekennzeichnet, daß das Pigment ein mit Antimon dotiertem Zinnoxid beschichteter Glimmer ist.

6. Verwendung der Lackformulierung nach mindestens einem der Ansprüche 1 bis 5 für elektrisch leitende Überzüge auf Kunststoffen.
